# EUROPÄISCHE PATENTSCHRIFT

(11) **EP 1 464 373 B1**
(45) Veröffentlichungstag und Bekanntmachung des Hinweises auf die Patenterteilung: **24.01.2007**
(21) Anmeldenummer: 03100904.6
(22) Anmeldetag: 04.04.2003
(51) Int. Cl.: B01D 29/41

(54) **Filtermodul enthaltend ein Stützelement und Verwendung eines Stützelementes zur Stabilisierung von Filtermedium**
Filter module with a support element and use of the support element for supporting the filter media
Elément filtrant pourvu d' un support et utilisation de l' élément support pour supporter le milieu filtrant

(43) Veröffentlichungstag der Anmeldung: 06.10.2004
(73) Patentinhaber: Filtrox AG, 9000 St. Gallen (CH)
(72) Erfinder: Bettschen, Jörg, 8592, Uttwil (CH)
(74) Vertreter: Müller, Christoph Emanuel

(56) Entgegenhaltungen:
- DE-A- 19 857 751
- DE-U- 9 016 242
- US-B1- 6 168 722

## Beschreibung

Die Erfindung betrifft ein Filtermodul enthaltend ein Stützelement sowie die Verwendung eines Stützelementes zur Stabilisierung eines Filtermediums einer Filterzelle.

Bei verschiedenen Herstellungsprozessen u.a. in der Nahrungsmittel-Industrie, der pharmazeutischen oder chemischen Produktion sind häufig Trennungsvorgänge wie beispielsweise Filtration erforderlich. Beim Passieren der Filtermedien werden grössere Partikel oder Aggregate, die im Unfiltrat enthalten sind, auf der Oberfläche von Filtern zurückgehalten. Beispielshaft kann ein verwendeter Filter aus einer Mehrzahl von stapelförmig angeordneten und zu einer Einheit verbundenen Filterzellen bestehen, der sich als eine solche einzelne Einheit, d.h. als Filtermodul in ein Filtriergerät einsetzen lässt. In DE 37 41 552 wird beispielsweise ein derartiges Filtermodul beschrieben. Die eingesetzten Filterzellen beinhalten neben zwei Lagen Filtermedium ein Abstandselement, das zwischen den beiden Lagen Filtermedium angeordnet ist und einerseits das Filtermedium stützt und zum anderen stabile Kanäle für den Filtratabfluss bildet. Das Filtrat wird durch eine zentrale Öffnung der Filterzellen gesammelt und einem Auslass zugeführt. Mittels Adapterstücken kann das Filtermodul an entsprechende Anschlussstücke im Filtriergerät bzw. anderen Filtermodulen angeschlossen werden.

Damit ein wirtschaftlich sinnvoller Durchsatz des Unfiltrats erzielt werden kann, findet die Filtration in der Regel unter Druckbeaufschlagung statt. Allerdings hat sich herausgestellt, dass es insbesondere zu Beginn bzw. zum Ende eines Filtrationsvorganges, aber auch während der Filtration oder bei Reinigungsprozessen des Filtermodul zu Druckschwankungen zwischen Unfiltrat- und Filtratraum kommt, welche eine Beschädigung des Filtermoduls bzw. der Filterzellen verursachen können. Die Druckbelastungen entstehen beispielsweise beim Ablassen des Unfiltrates aus dem Filtriergerät, ohne dass durch Belüften ein Ausgleich im Unfiltrat-Raum stattfindet, bei der Rückspülung des Filtermoduls, wenn Filtrat oder Reinigungsflüssigkeit mit einem ungeeigneten Druck, d.h. zu hohen Druck durch das Filtermedium gepresst wird oder bei unbeabsichtigtem Filtratrückfluss. Diese Beschädigungen äussern sich beispielsweise in einer Deformation einer Filterzelle oder im weit schwerwiegenderem Fall in einer Zerstörung des Filtermediums, besonderes bei den im Stapel aussen liegenden Filterzellen. Am Aussenumfang des Anschlusselements besteht ein Übergangsbereich zwischen Filterzelle und Anschlussstück bzw. Adapterstück, welcher besonders anfällig für eine Beschädigung ist. Neben der Beeinträchtigung des Filtermoduls durch diese Druckeffekte kann auch allein aufgrund der Gewichtskraft der feuchten Filterzellen und hier besonders derjenigen, die am unteren Ende des Stapels angeordnet sind, eine Deformation oder Beschädigung auftreten. Eine Filtration mit einer zerstörten Filterzelle, d.h. dem Filtermodul ist nicht mehr möglich, so dass ein Austausch des Filtermoduls erforderlich wird.

EP 0 327 394 beschreibt einen Filterstapel mit einer Mehrzahl von Filterzellen, wobei das Filtermedium dieser Filterzellen durch eine zweite, zur Unfiltrat-Seite hin angeordnete netzförmige Gewebeschicht abgedeckt wird. Nachteilig an einer solchen Anordnung ist allerdings die erhebliche Verringerung der für die Filtration zur Verfügung stehenden Oberfläche sowie die Schwierigkeiten, eine dichte Verbindung der Schichten am Umfangsrand bzw. am Innenumfang der zentralen Öffnung der Filterzellen herzustellen. Ebenso aufwendig ist bei der Herstellung des Filtermoduls die korrekte Ausrichtung der beiden Schichten, d.h. des Filtermediums sowie der netzförmigen Gewebeschicht zueinander.

Die DE 198 57 751 zeigt einen Modulfilter, bei welchem die Anströmung der Filtermodule mit Unfiltrat durch einen Zentralkanal erfolgt. Die Filtermodule umfassen Filterzellen, in welche die Feststoffe angelagert werden können so dass sie bei der Entsorgung nicht nach aussen treten können. Die Filtergehäusewände kommen nur mit den Filtrat in Kontakt, eine aufwändige Reinigung entfällt dadurch. Zwischen den Filterzellen des Filtermoduls ist je ein Drainagestützkörper angeordnet zur Abstützung des Differenzendrucks und zum Ableiten des Filtrats zu einem Ablauf des Modulfilters.

Die Aufgabe der Erfindung ist es, die Nachteile des Bekannten zu vermeiden und insbesondere ein Filtermodul bereitzustellen, welche eine Verformung der im Stapel aussen liegenden Filterzellen vermeidet bzw. eine Beschädigung des Filtermediums dieser Filterzellen verhindert.

Die Aufgabe wird gelöst durch ein Filtermodul mit einem Stützelement gemäss den Merkmalen des unabhängigen Anspruchs.

Das erfindungsgemässe Filtermodul für ein Filtergerät enthält eine Mehrzahl von stapelförmig aufeinander gesetzten Filterzellen. Eine Filterzelle weist Filtermedien auf, welche den Filtrat-Raum von einem Unfiltrat-Raum trennen. Der Stapel von Filterzellen wird durch wenigstens zwei Zusammenhalteelemente in Längsrichtung des Filtermodul dichtend gehalten. Das Filtermodul ist durch ein Stützelement gekennzeichnet, welches zur Aufnahme von in Längsrichtung des Filtermoduls auf das Filtermedium ein wirkenden Kräfte zwischen einem Zusammenhalteelement und einer benachbarten Filterzelle vorgesehen ist.

Eine Filterzelle, wie sie in einem erfindungsgemässen Filtermodul verwendet wird, enthält ein Abstandselement, das zwischen den Filtermedien angeordnet ist. Das Abstandselement weist Filtratabflusskanäle auf und stellt sicher, dass diese Kanäle zwischen den Filtermedien offen gehalten werden. Die Filterzelle weist weiter eine zentrale Öffnung auf, welche das aus den Filtratabflusskanälen austretende Filtrat sammelt und einer Ableitung zuführt. Die Filtermedien einer solchen Filterzelle sind an deren radialen Aussenumfang gegeneinander abgedichtet, beispielsweise durch eine Klammerung. Vorzugsweise sind die Filterzellen kreisrund ausgeführt.

Das Stützelement stabilisiert die Filterzellen, welche in unmittelbarer Nachbarschaft zum Zusammenhalteelement angeordnet sind, dadurch dass das Stützelement einen grösseren Aussendurchmesser als das Zusammenhalteelement aufweist und sich damit radial weiter über Oberfläche des Filtermediums und des darunter angeordneten Abstandselements der Filterzelle erstreckt, als dies durch das Zusammenhalteelement erfolgt. Das Filtermedium auf der dem Zusammenhalteelement zugewandten Seite der Filterzelle wird somit im wesentlichen von beiden Seiten seiner Oberfläche gestützt bzw. in seiner Lage gehalten. Eine Belastung des Filtermediums durch den Flüssigkeitsdruck, welcher insbesondere im Übergangsbereich zwischen dem Aussenumfang des dichtend an der Filterzelle, d.h. dem Filtermedium anliegenden Zusammenhalteelement und der davon radial nach aussen liegenden Oberfläche wirkt, wird reduziert oder vermieden. Diese Oberfläche ist im wesentlichen für die Flüssigkeit zugänglich und bewirkt die Filtration.

Die Formulierung "zwischen einem Zusammenhalteelement und einer benachbarten Filterzelle" ist im Rahmen der Erfindung so zu verstehen, dass nicht nur eine unmittelbare exakte Anordnung zwischen dem Zusammenhalteeelement und der Filterzelle zu verstehen ist, sondern auch die Situation, dass das Stützelement sich im wesentlichen formschlüssig und radial nach aussen erstreckend an den Aussenumfang des Zusammenhalteelements anschliesst und gleichzeitig an dem Teil des Filtermediums der benachbarten Filterzelle anliegt, welcher nicht durch das Zusammenhalteelement abgedeckt wird.

Bevorzugt ist das Stützelement mit einer zentralen Öffnung ausgeführt. Die Öffnung ermöglicht den Abfluss des Filtrats aus dem Filtermodul bzw. dem Filtrat-Abführ-Raum der Filterzelle ohne einer Notwendigkeit zusätzlicher Anschlüsse am Filtriergerät, insbesondere wenn zwei oder mehrere Filtermodule übereinander angeordnet sind. Weiterhin lässt sich eine vorteilhafte Anordnung des Stützelementes zwischen der Filterzelle und dem Zusammenhalteelement erzielen.

In einer bevorzugten Ausführungsform weist das Filtermodul ein Zusammenhalteelement auf, welches in seinem Aussenumfang eine Ausnehmung enthält. In dieser Ausnehmung wird das Stützelement vorteilhaft gehalten. Es entfällt die Notwendigkeit einer komplizierten Befestigung des Stützelements. Die Ausnehmung ist vorzugsweise in unmittelbarer Nachbarschaft zur Filterzelle angeordnet, so dass der Aussendurchmesser dieses benachbarten Bereichs des Zusammenhalteelements im Vergleich zum von der Filterzelle entfernten Teil des Zusammenhalteelements kleiner ist. Einhergehend mit dieser Ausgestaltung des Zusammenhalteelements weist das Stützelement eine zentrale Öffnung auf, welche in ihrer Dimension dem reduzierten Durchmesser des Zusammenhalteelements entspricht. Vorzugsweise besitzt das Stützelemente ein Öffnung, welche sich formschlüssig mit der Ausnehmung des Zusammenhalteelements in Eingriff bringen lässt. Die Ausnehmung erleichtert weiterhin eine Vereinfachung der Herstellung des Filtermoduls. Als Aussendurchmesser des Zusammenhalteelements ist in der Regel derjenige Durchmesser zu verstehen, welcher durch den im wesentlich grösseren Teil, bezogen auf die axiale Längenausdehnung des Zusammenhalteelements vorherrscht. Zwar kann das Zusammenhalteelement Bereiche in seiner Längenausdehnung aufweisen, welche einen erheblich anderen Durchmesser besitzen, diese Bereiche erfüllen allerdings meist andere spezifische Funktionen und sind deshalb nicht zur Definition des Aussendurchmessers wie zuvor diskutiert heranziehbar.

Das Stützelement ist weiter vorteilhaft mit sich radial nach aussen erstreckenden Rippen ausgestaltet. Die Rippen erlauben eine ausreichende Stützung des Filtermediums, ohne dass eine übermässige Reduktion der für die Filtration zur Verfügung stehenden Oberfläche des Filtermediums hervorgerufen wird. Mit einer gleichmässigen Anordnung der Rippen um die zentrale Öffnung des Stützelements wird den im Betrieb entstehenden Belastungen wirkungsvoll begegnet.

Besonders vorteilhaft ist das Stützelement ausgestaltet, wenn die Rippen am Aussenumfang und/oder Innenumfang des Stützelements durch Stege verbunden sind. Die Stege lassen sich vorteilhafterweise zusammen mit den Rippen herstellen. Bevorzugt sind die Rippen mit einem kontinuierlich umlaufenden Steg miteinander verbunden. Die Rippen können allerdings auch mittels Steg-Segmenten zu Gruppen zusammengefasst sein. Dabei müssen nicht zwangsläufig die Steg-Segmente am Aussenumfang die gleichen Rippen verbinden, die durch Steg-Segmente am Innenumfang verbunden sind. Es lassen sich vorteilhaft flexiblere Stützelemente mit geringerem Materialaufwand herstellen. Das Stützelement wird vorzugsweise aus einem identischen Material wie das Abstandselement der Filterzelle oder das Zusammenhalteelement mittels Spritzgussverfahren hergestellt. Geeignete Materialien sind dem Fachmann bekannt, vorzugsweise werden Polyolefine und insbesondere Polypropylen zur Herstellung der verschiedenen Elemente wie Stützelement, Abstandselement, Zusammenhalteelement, Trägerrohr etc. eingesetzt.

In einer alternativen Ausführungsform ist das Stützelement als eine Vollscheibe ausgebildet. Vorzugsweise weist das Stützelement eine zentrale Öffnung analog der bereits oben beschrieben auf. Ein derartiges Stützelement besitzt den Vorteil, dass zur Herstellung keine aufwendigen Werkzeuge notwendig sind. Ein derartiges Stützelement besitzt dennoch die notwendige Stabilität und Flexibilität, die zur Erfüllung der Stützfunktion erforderlich ist. Eine weitere vorteilhafte Ausführungsform des Stützelements weist eine gelochte Oberfläche des Stützelements auf. Neben der Reduktion des erforderlichen Materialbedarfs für das Stützelement wird eine verbesserte Zugänglichkeit des Filtermediums, welche durch das Stützelement überdeckt wird, ermöglicht.

Weiter vorteilhaft ist das Filtermodul mit einem Stützelement ausgeführt, das eine zentrale Öffnung aufweist, welche vorzugsweise grösser als die Öffnung der Filterzelle ist. Durch diesen grösseren Innendurchmesser der zentralen Öffnung ist es nicht erforderlich, dass das Stützelement eine Dichtungsfunktion zur Abdichtung des Unfiltratraumes gegenüber dem Filtratraum übernimmt. Als Filtratraum ist die Gesamtheit aller Volumina zu verstehen, in denen das Filtrat gesammelt oder geführt wird. Die Abdichtung wird durch das Zusammenhalteelement übernommen. Das Stützelement kann damit bei Einhaltung der notwendigen Stabilität im Hinblick auf die Funktion in seiner Dimensionierung, z.B. in seiner Dicke entsprechend angepasst werden.

Allerdings kann es in Abweichung vom zuvor Erläuterten in bestimmten Situationen notwendig sein, dass die zentrale Öffnung des Stützelements gleich gross oder geringfügig kleiner als die Öffnung der Filterzelle ausgeführt ist. Das so ausgeführte Stützelement übernimmt eine Dichtungsfunktion zwischen dem Zusammenhalteelement und der Filterzelle. Das Zusammenhalteelement und die entsprechend äussere Filterzelle sind voneinander getrennt, d.h. das Zusammenhalteelement sowie die Filterzelle besitzen keine gegenseitige Kontaktfläche mehr. Das Zusammenhalteelement kann in seiner Dimensionierung auf die spezifische Aufgabe der Verbindung des Filtermoduls mit dem Filtriergerät bzw. mit weiteren Filtermodulen ausgelegt werden.

Eine besonders vorteilhafte Ausführungsform des Filtermodul zeichnet sich durch ein Stützelement mit einem Aussendurchmesser aus, welcher zwischen dem 1,1-fachen des Aussendurchmesser des Zusammenhalteelementes und etwa dem Aussendurchmesser der Filterzelle beträgt. Vorzugsweise weist das Stützelement einen Aussendurchmesser zwischen dem 0,4- bis 0,8-fachen des Aussendurchmessers der Filterzelle auf. Im Abhängigkeit von der gewählten Grösse, d.h. dem Durchmesser der Filterzellen kann bereits ein Stützelement mit einem Aussendurchmesser, welcher dem 1,1-fachen des Aussendurchmessers des Zusammenhalteelements entspricht, ausreichend sein, um die erforderliche Stabilität zur Gewährleistung der Stützfunktion zu besitzen. Umgekehrt ist eine Situation vorstellbar, in der erst ein Stützelement mit einem etwa gleich grossen Aussendurchmesser wie die Filterzelle geeignet ist, die in longitudinaler Richtung des Filtermoduls auftretenden Kräfte aufnehmen zu können.

Weiter vorteilhaft ist das Filtermodul ausgeführt, wenn das Filtermodul ein Trägerrohr aufweist. Dieses Trägerrohr erlaubt eine gegenseitige Ausrichtung der Filterzellen sowie die Ausrichtung der Filterzellen in Nachbarschaft zu den Zusammenhalteelementen. Aufgrund dieses Trägerrohrs werden Kräfte, die im Betrieb oder bei der Handhabung des Filtermodul quer zur Längsausdehnung des Filtermoduls wirken, aufgenommen und die Dichtigkeit des Filtermoduls kann aufrechterhalten werden. Dies ist insbesondere dann von Vorteil, wenn die benachbarten Filterzellen, d.h. die sich gegenüberliegenden Filtermedien dieser benachbarten Filterzellen durch Dichtungselemente dichtend gegeneinander abgestützt werden. Die Dichtungselemente gewährleisten einerseits eine verbesserte Abdichtung im Vergleich zu einem unmittelbaren Kontakt der benachbarten Filtermedien. Zum anderen wird die Zugänglichkeit der Oberfläche der Filtermedien erhöht. Das Trägerrohr ermöglicht zudem ein vorteilhaftes Zusammenhalten des Filtermoduls durch die Zusammenhalteelemente. Die Zusammenhalteelemente können durch dem Fachmann bekannte und geeignete Methoden, beispielsweise mittels Verklebung, Schraubung, Verschweissung, Anformung oder Rastung auf dem Trägerrohr befestigt werden. Alternative kann die Befestigung mit Stahl- oder Kunststoffbändern erfolgen.

In einer weiteren alternativen Ausführungsform ist das Stützelement Teil des Zusammenhalteelements. Das Teil des Zusammenhalteelements, welche die Stützfunktion gegenüber den Filtermedien übernimmt, besitzt allerdings analog zum zuvor Ausgeführten einen grösseren Aussendurchmesser wie der Teil des Zusammenhalteelements, welche die Verbindung mit dem Filtriergerät bzw. weiteren Filtermodulen herstellt. Vorzugsweise beträgt der Aussendurchmesser des Teil des Zusammenhalteelements, welche einem intregierten Stützelement entspricht, mindestens das 0,4- bis 0,8-fache des Aussendurchmessers der Filterzelle.

Eine andere Ausführungsform des Filtermoduls sieht ein Stützelement vor, welches in der Lage ist, im Übergangsbereich zwischen Zusammenhalteelement und benachbarter Filterzelle, d.h. dem Filtermedium die Abstützung des Filtermedium zu erzielen, sich jedoch in Form einer Art tassenförmigen Kappe, vorzugsweise mit einer zentralen Öffnung über das Zusammenhalteelement stülpt. Für eine sichere Befestigung des Stützelements auf der Struktur des Filtermoduls ist daher ein weiteres Befestigungselement vorzusehen. Dieses Befestigungselement lässt sich beispielsweise mittels eines Gewindeabschnittes mit dem Trägerrohr verbinden. Weitere Möglichkeiten zur Verbindung des Befestigungselements sind dem Fachmann bekannt. Das Stützelement kann ebenfalls die zuvor beschriebenen Rippen bzw. Stege enthalten.

Ein Filtermodul weist weiter vorteilhaft mindestens ein Anschlusselement auf, welches bezogen auf die Längsausdehnung des Filtermoduls an dessen Ende angeordnet ist. Ein entsprechend ausgestaltetes Anschlusselement ermöglicht eine einfache und dichtende Verbindung mit dem Filtriergerät bzw. mit weiteren Filtermodulen. Vorstellbar ist auch eine Kombination des Anschlusselements mit einem Befestigungs- oder Zusammenhalteelement, beispielsweise als einstückiges ausgeformtes Element.

Ein weiterer Aspekt der Erfindung ist die Verwendung eines Stützelements zur Stabilisierung einer Filterzelle eines Filtermoduls, wobei das Stützelement wie zuvor ausgeführt zwischen einem Zusammenhalteelement des Filtermoduls und einem Filtermedium der Filterzelle angeordnet ist.

Die Erfindung wird im folgenden durch Zeichnungen näher ausgeführt. Es zeigt
- Figur 1:: ein Filtermodul mit den erfindungsgemässen Stützelementen in Seitenansicht;
- Figur 2:: eine Detailansicht des Filtermoduls im Bereich des Zusammenhalteelements;
- Figur 3a:: einen Querschnitt einer ersten Ausführungsform eines Stützelements;
- Figur 3b:: eine Aufsicht auf die erste Ausführungsform des Stützelements;
- Figur 4a:: einen Querschnitt einer zweiten Ausführungsform eines Stützelements;
- Figur 4b:: eine Aufsicht auf die zweite Ausführungsform des Stützelements;
- Figur 5:: einen Querschnitt einer weiteren alternativen Ausführungsform des Stützelements; und
- Figur 6:: einen Querschnitt einer dritten alternativen Ausführungsform des Stützelements.

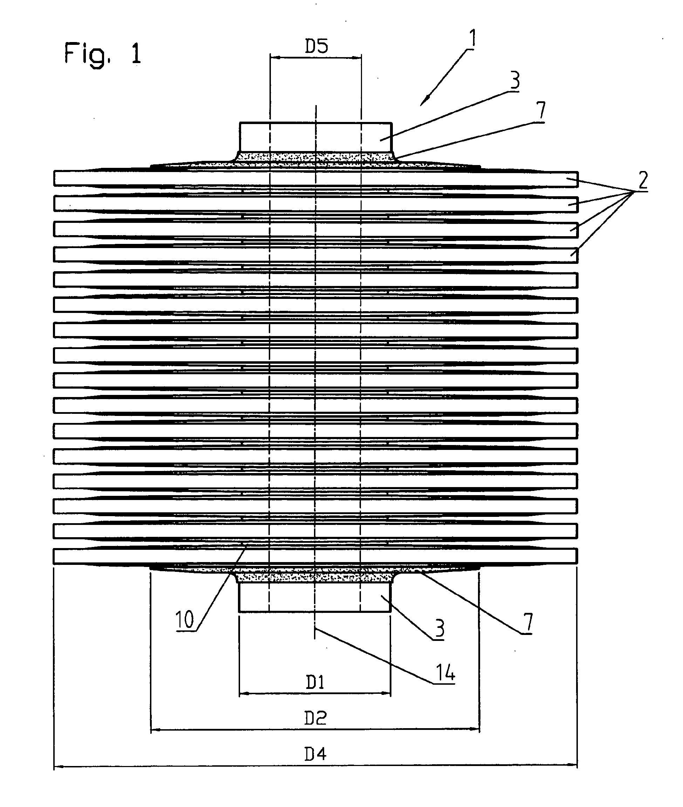

Ein erfindungsgemässes Filtermodul 1 in einer seitlichen Ansicht zeigt Figur 1. Das Filtermodul 1 enthält einen Stapel von 16 kreisringförmigen und konzentrisch zur Längsachse 14 des Filtermoduls 1 angeordneten Filterzellen 2 (Durchmesser 286 mm), wobei jeweils ein Dichtungselement 10 die sich entsprechend gegenüberliegenden Filtermedien 4 der benachbarten Filterzellen 2 dichtend voneinander trennt. Aufgrund der Dichtungselemente 10 wird zwischen den Filterzellen ausreichend Raum für den Zutritt des Unfiltrat auf die für die Filtration verfügbare Oberfläche der Filtermedien erzeugt. Im Filtermodul 1 sind zwei Stützelemente 7 in Nachbarschaft zu Zusammenhalteelementen 3 gezeigt. Die Stützelemente 7 besitzen auf der dem Zusammenhalteelement 3 zugewandten Seite eine annähernd identische Dimensionierung wie das Zusammenhalteelement 3. Auf der dem Filtermedium zugewandten Seite weist das Stützelements 7 einen Aussendurchmesser D2 von 180 mm auf.

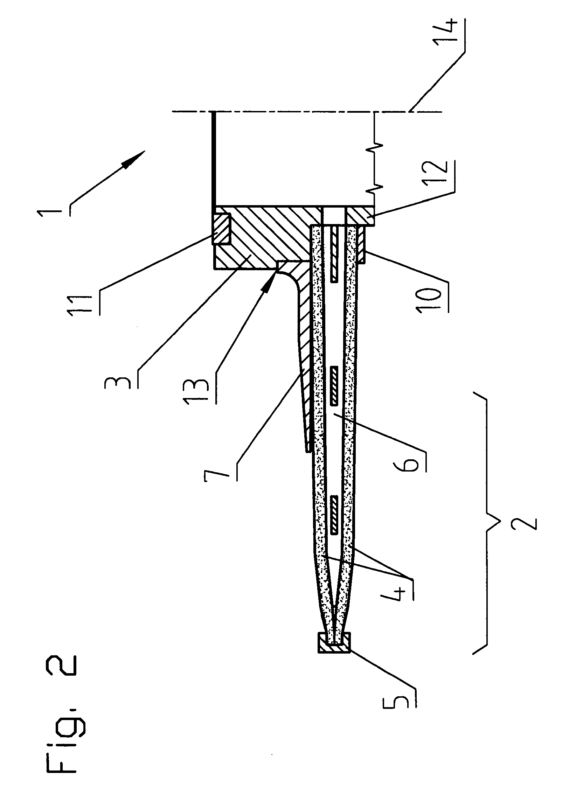

Eine detailierte Ansicht des Filtermoduls 1 im Bereich des Zusammenhalteelements 3 ist in Figur 2 dargestellt, insbesondere sind die Bestandteile der Filterzelle 2 erkennbar. Die Filtermedien 4 der Filterzelle 2 werden durch das Abstandselement 6 voneinander getrennt. Die Querschnitts-Figur 2 zeigt einen Filtrat-Kanal, welcher konstruktiv im Abstandselement 6 vorgesehen ist. Die Figur zeigt das Abstandselement mit einem Querschnitt zwischen zwei Rippen, so dass einzig drei der verbindenden Stege erkennbar sind. Die Filtermedien 4 sind an deren äusseren Umfang mittels der Abdichtung 5 verbunden. Das Stützelement 7 ist in der Ausnehmung 13 des Zusammenhalteelements 3 angeordnet. Der Durchmesser der zentralen Öffnung des Stützelements 7 ist geringfügig, d.h. um etwa 3% kleiner als der Aussendurchmesser des Zusammenhalteelements 3. Eine Abdichtung für die Trennung des Unfiltratraums vom Filtratraum ist nicht notwendig. Das Stützelement 7 stützt etwa 40% der Oberfläche des Filtermediums 4, ohohne allerdings diese Oberfläche vollständig für das Unfiltrat zu blockieren. Das Zusammenhalteelement 3 ist mit dem Trägerrohr 12 verbunden. Für das Zusammensetzung des Filtermoduls 1 werden zwei Trägerrohr-Abschnitte 12 (Durchmesser D5) mit den integrierten Zusammenhalteelementen 3 miteinander verschraubt. Zur Abdichtung des Filtratraumes gegenüber dem Unfiltratraum beim Zusammenhalte des Filtermoduls an ein Filtriergerät oder ein weiteres Filtermodul ist in die Stirnfläche des Zusammenhalteelements 3 eine Aufnahme für eine Dichtung 11 eingearbeitet. Zwischen den einzelnen Filterzellen wird zur dichtenden Trennung des Unfiltratraums vom Filtratraum ein Distanzelement (Dichtungselement 10) angeordnet.

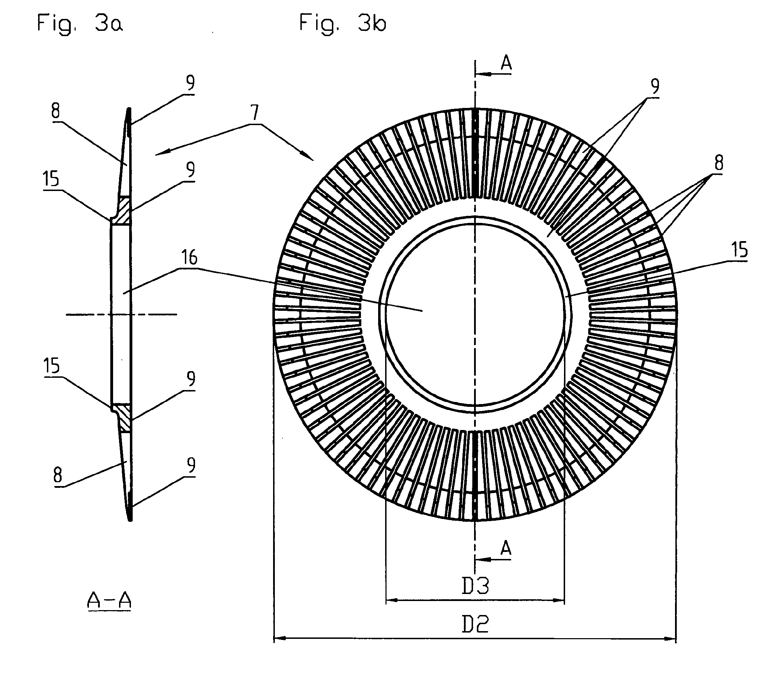

Eine Ausführungsform des Stützelements 7 ist in Figur 3a im Querschnitt und in Figur 3b in einer Aufsicht dargestellt. Figur 3a ist ein Querschnitt entlang der Linie A-A der Figur 3b. Das Stützelement 7 weist eine Anzahl von Rippen 8 sowie zwei Stege 9 in Form von Ringen auf. Die Oberfläche des Filtermediums ist zumindest teilweise für eine Filtration des Unfiltrats zugänglich. Die Rippen 8 und Stege 9 stützen bei den im Betrieb auftretenden Druckschwankungen bzw. bei der Handhabung des durchfeuchteten Filtermoduls das Filtermedium ab. Eine Beschädigung des Filtermediums wird verhindert. In den beiden Figuren ist ebenfalls die Kontaktfläche 15 des Stützelements 7 erkennbar, welche in axialer Richtung des Filtermoduls mit dem Zusammenhalteelement in Kontakt steht. Die zentrale Öffnung 16 des Stützelements 7 besitzt einen Durchmesser D3 von 79 mm, der Aussendurchmesser D2 beträgt 180 mm. Die Dicke des Stützelemente 7 beträgt an der zentralen Öffnung 8 mm und am äusseren Umfang 1 mm.

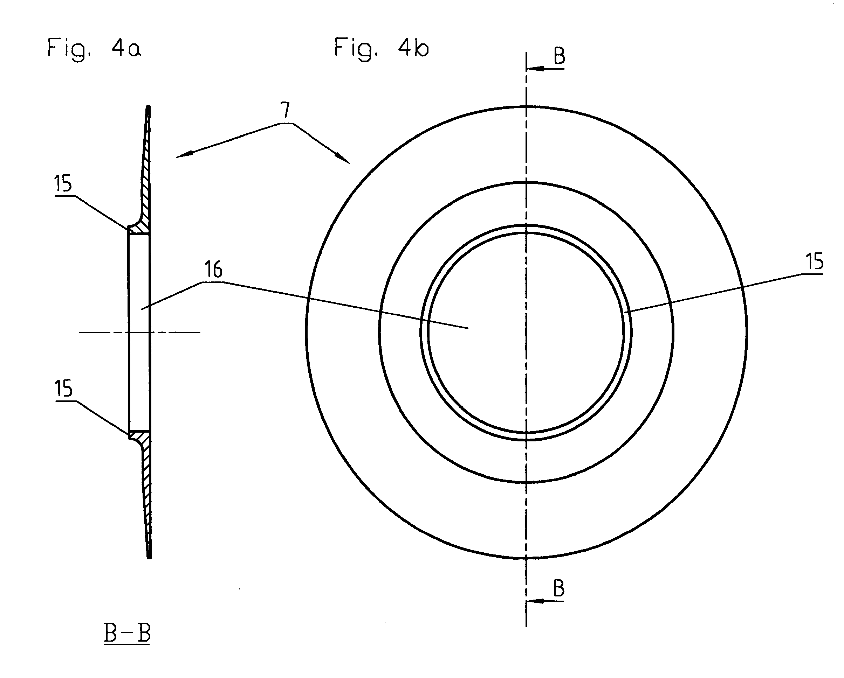

Eine andere Ausführungsform des Stützelements 7 ist in den Figuren 4a und 4b gezeigt, wobei Figur 4a wiederum ein Querschnitt entlang der Linie B-B der Figur 4b ist. Das Stützelement ist scheibenförmig mit einer variierende Dicke ausgeführt. Analog zur Ausführungsform gemäss den Figuren 3a und 3b, weist das Stützelement 7 ebenfalls eine Kontaktfläche 15 auf. Unmittelbar an die zentrale Öffnung 16 des Stützelementes 7 verjüngt sich in radialer Richtung die Dicke des Stützelements erheblich, d.h. auf die Hälfte der Dicke an der zentralen Öffnung. Der Vorteil eines solchen Stützelements 7 ist dessen einfache Herstellung.

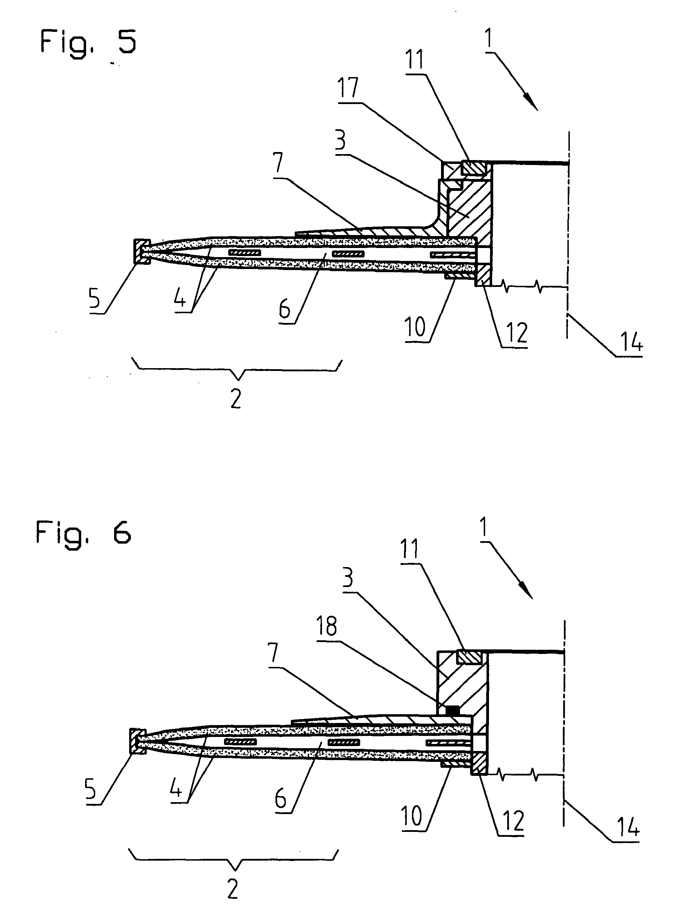

Eine weitere alternative Form des Stützelements 7 ist in Figur 5 gezeigt. Das Stützelement 7 stülpt sich in Form einer Kappe über das Zusammenhalteelement 3, das Teil des Trägerrohrs 12 ist. Damit das Filtrat das Filtermodul 1 verlassen kann, besitzt das Stützelement 7, insbesondere im Bereich des Filtrat-Raumes eine Öffnung 16. Die Filterzelle 2 mit seinen Bestandteilen Filtermedium 4, Abdichtung 5 und Abstandselement 6 wird durch das Stützelement 7 gegen Belastungen in Längsrichtung des Filtermoduls 1 stabilisiert. Das Stützelement 7 wird mittels des Befestigungselementes 17 an der Trägerrohr-Struktur 12 fixiert. Das Befestigungselement 17 weist zum dichtenden Anschluss des Filtermoduls 1 an ein Filtriergerät eine eingesetzte Dichtung 11 auf.

Eine detailierte Ansicht einer alternativen Ausführungsform des Stützelements 7 ist in Figur 6 dargestellt. Das Stützelement 7 trennt das Trägerrohr 12 annähernd vom Zusammenhalteelement 3 und weist daher Dichtung 18 auf. Die Filterzelle 2 besitzt einen analogen Aufbau wie bereits in Figur 2 gezeigt: Filtermedien 4, welche am äusseren Umfang mittels der Abdichtung 5 verbunden ist, und ein zwischen den Filtermedien 4 angeordnetes Abstandselement 6. Der Durchmesser der zentralen Öffnung des Stützelements 7 ist weist eine identische Grösse wie die Filterzelle 2 auf. Die Überdeckung der Oberfläche des Filtermediums 4 durch das Stützelement 7 ist analog zur Figur 5. Zur Abdichtung des Filtratraumes gegenüber dem Unfiltratraum beim Anschluss des Filtermoduls 1 an ein Filtriergerät oder ein weiteres Filtermodul 1 ist in die Stirnfläche des Zusammenhalteelements 3 eine Aufnahme für eine Dichtung 11 eingearbeitet. Zwischen den einzelnen Filterzellen wird zur dichtenden Trennung des Unfiltratraums vom Filtratraum ein Distanzelement (Dichtungselement 10) angeordnet.

## Patentansprüche

1. Filtermodul (1) für ein Filtergerät mit einer Mehrzahl von als Stapel aufeinander gesetzten Filterzellen (2) sowie Filtermedien (4), die einen Filtrat-Raum von einem Unfiltrat-Raum trennen und wobei der Stapel von Filterzellen (2) durch wenigstens zwei Zusammenhalteelemente (3) in Längsrichtung des Filtermoduls (1) dichtend gehalten wird, **dadurch gekennzeichnet, dass** wenigstens ein Stützelement (7) zur Aufnahme von in Längsrichtung des Filtermoduls (1) auf das Filtermedium (4) einwirkenden Kräfte zwischen einem Zusammenhalteelement (3) und einer benachbarten Filterzelle (2) vorgesehen ist.

2. Filtermodul (1) nach Anspruch 1, **dadurch gekennzeichnet, dass** das Stützelement (7) eine zentrale Öffnung (16) aufweist.

3. Filtermodul (1) nach Anspruch 1 oder 2, **dadurch gekennzeichnet, dass** das Zusammenhalteelement (3) im Aussenumfang eine Ausnehmung (13) aufweist, welche das Stützelement (7) aufnimmt.

4. Filtermodul (1) nach einem der vorangehenden Ansprüche, **dadurch gekennzeichnet, dass** das Stützelement (7) sich radial nach aussen erstreckende Rippen (8) aufweist.

5. Filtermodul (1) nach Anspruch 4, **dadurch gekennzeichnet, dass** die Rippen (8) am äusseren Umfang des Stützelements (7) und/oder an der zentralen Öffnung (16) des Stützelements (7) durch Stege (9) und/oder Steg-Segmente miteinander verbunden sind.

6. Filtermodul (1) nach einem der Ansprüche 1 bis 3, **dadurch gekennzeichnet, dass** das Stützelement (7) scheibenförmig ausgebildet ist.

7. Filtermodul (1) nach einem der Ansprüche 2 bis 6, **dadurch gekennzeichnet, dass** die zentrale Öffnung (16) des Stützelements (7) vorzugsweise grösser als die zentrale Öffnung der Filterzelle (2) ist.

8. Filtermodul (1) nach einem der vorangehenden Ansprüche, **dadurch gekennzeichnet, dass** das Stützelement (7) einen Aussendurchmesser (D2) aufweist, welcher einen Wert zwischen dem 1,1-fachen des Aussendurchmesser (D1) des Zusammenhalteelementes (3) und dem Aussendurchmesser (D4) der Filterzelle (2) beträgt.

9. Filtermodul (1) nach einem der vorangehenden Ansprüche, **dadurch gekennzeichnet, dass** das Filtermodul (1) weiter ein Trägerrohr (12) aufweist, auf welchem die Filterzellen (2) und die Zusammenhalteelemente (3) zueinander ausgerichtet angeordnet sind.

10. Filtermodul (1) nach einem der Ansprüche 1 bis 6, **dadurch gekennzeichnet, dass** das Stützelement (7) so angeordnet ist, dass das Zusammenhalteelement (3) und die Filterzelle (2) vollständig voneinander getrennt sind.

11. Verwendung eines Stützelementes (7) zur Stabilisierung einer Filterzelle (2) eines Filtermoduls (1) nach Anspruch 1, wobei das Stützelement (7) zwischen einem Zusammenhalteelement (3) des Filtermoduls (1) und einem Filtermedium (4) der Filterzelle (2) angeordnet ist, und wobei die Filterzelle (2) benachbart zum Zusammenhalteelement (3) angeordnet ist.

12. Filtriergerät mit mindestens einem Filtermodul (1) nach einem der Ansprüche 1 bis 10.

## Claims

1. Filter module (1) for a filtering device with a plurality of filter cells (2), placed one on top of the other as a stack, and filter media (4), which separate a filtrate space from a non-filtrate space, and the stack of filter cells (2) being held in a sealing manner in the longitudinal direction of the filter module (1) by at least two holding-together elements (3), **characterized in that** at least one supporting element (7) is provided for absorbing forces acting on the filter medium (4) in the longitudinal direction of the filter module (1), between a holding-together element (3) and an adjacent filter cell (2).

2. Filter module (1) according to Claim 1, **characterized in that** the supporting element (7) has a central opening (16).

3. Filter module (1) according to Claim 1 or 2, **characterized in that** the holding-together element (3) has in the outer circumference a recess (13) which receives the supporting element (7).

4. Filter module (1) according to one of the preceding claims, **characterized in that** the supporting element (7) has radially outwardly extending ribs (8).

5. Filter module (1) according to Claim 4, **characterized in that** the ribs (8) on the outer circumference of the supporting element (7) and/or on the central opening (16) of the supporting element (7) are connected to one another by webs (9) and/or web segments.

6. Filter module (1) according to one of Claims 1 to 3, **characterized in that** the supporting element (7) takes the form of a disc.

7. Filter module (1) according to one of Claims 2 to 6, **characterized in that** the central opening (16) of the supporting element (7) is preferably larger than the central opening of the filter cell (2).

8. Filter module (1) according to one of the preceding claims, **characterized in that** the supporting element (7) has an outside diameter (D2) which has a value between 1.1 times the outside diameter (D1) of the holding-together element (3) and the outside diameter (D4) of the filter cell (2).

9. Filter module (1) according to one of the preceding claims, **characterized in that** the filter module (1) also has a carrier tube (12), on which the filter cells (2) and the holding-together elements (3) are aligned with respect to one another.

10. Filter module (1) according to one of Claims 1 to 6, **characterized in that** the supporting element (7) is arranged in such a way that the holding-together element (3) and the filter cell (2) are completely separate from one another.

11. Use of a supporting element (7) for stabilizing the filter cell (2) of a filter module (1) according to Claim 1, the supporting element (7) being arranged between a holding-together element (3) of the filter module (1) and a filter medium (4) of the filter cell (2), and the filter cell (2) being arranged adjacent to the holding-together element (3).

12. Filtering device with at least one filter module (1) according to one of Claims 1 to 10.

## Revendications

1. Module filtrant (1) pour un appareil filtrant, comprenant plusieurs cellules filtrantes (2) superposées sous forme d'empilement et plusieurs moyens filtrants (4) qui séparent un espace de filtrat et un espace de produit à filtrer, l'empilement de cellules filtrantes (2) étant fixé de manière étanche dans le sens longitudinal du module (1) grâce à au moins deux éléments d'assemblage (3), **caractérisé en ce qu'**il est prévu entre un élément d'assemblage (3) et une cellule filtrante (2) voisine au moins un élément de support (7) pour recevoir des forces agissant sur le moyen filtrant (4) dans le sens longitudinal du module filtrant (1).

2. Module filtrant (1) selon la revendication 1, **caractérisé en ce que** l'élément de support (7) a une ouverture centrale (16).

3. Module filtrant (1) selon la revendication 1 ou 2, **caractérisé en ce que** l'élément d'assemblage (3) présente sur sa circonférence extérieure un creux (13) qui reçoit l'élément de support (7).

4. Module filtrant (1) selon l'une des revendications précédentes, **caractérisé en ce que** l'élément de support (7) présente des ailettes (8) qui s'étendent radialement vers l'extérieur.

5. Module filtrant (1) selon la revendication 4, **caractérisé en ce que** les ailettes (8) sont reliées entre elles, sur la circonférence extérieure de l'élément de support (7) et/ou au niveau de l'ouverture centrale (16) de l'élément de support (7), par des bords (9) et/ou des segments de bords.

6. Module filtrant (1) selon l'une des revendications 1 à 3, **caractérisé en ce que** l'élément de support (7) a la forme d'un disque.

7. Module filtrant (1) selon l'une des revendications 2 à 6, **caractérisé en ce que** l'ouverture centrale (16) de l'élément de support (7) est de préférence plus grande que l'ouverture centrale de la cellule filtrante (2).

8. Module filtrant (1) selon l'une des revendications précédentes, **caractérisé en ce que** l'élément de support (7) a un diamètre extérieur (D2) dont la valeur est située entre 1,1 fois le diamètre extérieur (D1) de l'élément d'assemblage (3) et le diamètre extérieur (D4) de la cellule filtrante (2).

9. Module filtrant (1) selon l'une des revendications précédentes, **caractérisé en ce que** le module filtrant (1) comporte également un tube porteur (12) sur lequel les cellules filtrantes (2) et les éléments d'assemblage (3) sont alignés.

10. Module filtrant (1) selon l'une des revendications 1 à 6, **caractérisé en ce que** l'élément de support (7) est disposé de sorte que l'élément d'assemblage (3) et la cellule filtrante (2) soient complètement séparés l'un de l'autre.

11. Utilisation d'un élément de support (7) pour stabiliser une cellule filtrante (2) d'un module filtrant (1) selon la revendication 1, l'élément de support (7) étant disposé entre un élément d'assemblage (3) du module filtrant (1) et un moyen filtrant (4) de la cellule filtrante (2), et la cellule filtrante (2) étant disposée près de l'élément d'assemblage (3).

12. Appareil filtrant comportant au moins un module filtrant (1) selon l'une des revendications 1 à 10.
